(19) Europäisches Patentamt
European Patent Office
Office européen des brevets

(11) **EP 3 745 784 A1**

(12) **EUROPEAN PATENT APPLICATION**
published in accordance with Art. 153(4) EPC

(43) Date of publication:
**02.12.2020 Bulletin 2020/49**

(51) Int Cl.:
*H04W 56/00* (2009.01)     *H04J 3/06* (2006.01)

(21) Application number: **19754842.3**

(22) Date of filing: **13.02.2019**

(86) International application number:
**PCT/CN2019/074924**

(87) International publication number:
**WO 2019/158067 (22.08.2019 Gazette 2019/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.02.2018  CN 201810150956**

(71) Applicant: **HUAWEI TECHNOLOGIES CO., LTD.**
**Shenzhen, Guangdong 518129 (CN)**

(72) Inventors:
• **JI, Tong**
  **Shenzhen, Guangdong 518129 (CN)**
• **GAO, Feng**
  **Shenzhen, Guangdong 518129 (CN)**
• **ZHANG, Yanfei**
  **Shenzhen, Guangdong 518129 (CN)**
• **YANG, Kun**
  **Shenzhen, Guangdong 518129 (CN)**
• **YU, Guangwei**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD AND APPARATUS FOR TRANSMITTING TIME INFORMATION**

(57)     Embodiments of this application disclose a time information transmission method and an apparatus, and relate to the field of wireless communications, to resolve a problem that an error between time determined by a terminal device and time of the network device is relatively large. A specific solution including: generating and sending first information whose indication granularity is less than or equal to 5 milliseconds, where the first information is used to indicate time information of a first reference point. The embodiments of this application are used in a time synchronization process between the terminal device and the network device.

FIG. 2

EP 3 745 784 A1

## Description

This application claims priority to Chinese Patent Application No. 201810150956.8, filed with the Chinese Patent Office on February 13, 2018 and entitled "TIME INFORMATION TRANSMISSION METHOD AND APPARATUS", which is incorporated herein by reference in its entirety.

## TECHNICAL FIELD

Embodiments of this application relate to the field of wireless communications, and in particular, to a time information transmission method and an apparatus.

## BACKGROUND

With development of mobile communications technologies, the 5th generation (5th generation, 5G) mobile communications technology has become a global research and development hotspot. The mobile internet and the internet of things are the main driving forces for future communications development and will have a huge impact on people's living, work, leisure, transportation, and the like. 5G service requirements are diversified. For example, in an industrial control scenario, a controller needs to keep time synchronization with an executor. The controller sends control signaling to the executor, and indicates the executor to execute a command at determined time. If the executor and the controller have different perceptions of time, that is, time is not synchronized, the executor executes the command at incorrect time. As a result, a task fails to be executed. In a smart grid scenario, a phase measurement unit (phase measurement unit, PMU) deployed on a power line as a terminal device is configured to sense a change of power information, for example, a change of a voltage or a current. Each PMU needs to be time-synchronized to facilitate determining of a fault source. If the PMUs have different time perceptions, the fault source cannot be accurately determined.

In the prior art, as a centralized controller of a terminal device, a network device may serve as a time synchronization source of the terminal device, and send indication information to the terminal device, so that all terminal devices in a cell keep time synchronization with the network device, thereby indirectly achieving time synchronization between terminal devices. However, in some industrial communication scenarios, synchronization at a microsecond level needs to be kept between the terminal devices. If the terminal device determines time based on the prior art, because an indication granularity of the indication information is relatively large, an error between the time determined by the terminal device based on the indication information and time of the network device is relatively large. Therefore, the terminal device in the prior art cannot meet a time synchronization requirement in the industrial communication scenarios.

## SUMMARY

Embodiments of this application provide a time information transmission method and an apparatus, to resolve a problem that an error between time determined by a terminal device and time of the network device is relatively large.

To achieve the foregoing objective, the following technical solutions are used in the embodiments of this application.

According to a first aspect of the embodiments of this application, a time information transmission method is provided. The method includes: generating and sending first information whose indication granularity is less than or equal to 5 milliseconds, where the first information is used to indicate time information of a first reference point. A sending entity that sends the first information may be a network device, or may be a chip of the network device. A receiving entity that receives the first information may be a terminal device, or may be a chip of the terminal device. According to the time information transmission method provided in this embodiment of this application, the indication granularity of the indication information is reduced, so that precision of the indication granularity of the indication information is improved compared with the prior art. High-precision time information is transmitted to the receiving entity, so that the receiving entity determines time based on the high-precision time information, and an error between time determined by the receiving entity and time of the sending entity is reduced, so that the receiving entity meets a time synchronization requirement in an industrial communication scenario.

With reference to the first aspect, in a possible implementation, where that the first information is used to indicate time information of a first reference point includes: the first information is used to indicate the time information of the first reference point in a universal clock; or the first information is used to indicate a part of the time information of the first reference point in a universal clock.

With reference to the first aspect or the foregoing possible implementations, in another possible implementation, the sending first information includes: sending the first information by using a system message; or sending the first information by using at least one of dedicated radio resource control (radio resource control, RRC) signaling, media access control (medium access control, MAC) layer signaling, and physical layer signaling. In this way, the first information is sent in a unicast manner, thereby improving security of time information transmission, and preventing the time information from being tampered with, attacked, or the like.

With reference to the first aspect or the foregoing possible implementations, in another possible implementation, the first reference point is a boundary of a time unit corresponding to a time domain position at which the first information is sent for a first time.

With reference to the first aspect or the foregoing possible implementations, in another possible implementation, the first reference point corresponds to information content in the first information, and/or the first reference point corresponds to content in downlink control information (downlink control information, DCI) used for scheduling the first information.

With reference to the first aspect or the foregoing possible implementations, in another possible implementation, the time unit corresponding to the time domain position of the first information is a time unit in which the time domain position of the first information is located; or, the time unit corresponding to the time domain position of the first information is a time unit indicated in DCI corresponding to the first information.

With reference to the first aspect or the foregoing possible implementations, in another possible implementation, where the first information is used to indicate a part of the time information of the first reference point in a universal clock further includes: sending second information by using the system message, where the second information is used to indicate the time information of the first reference point; an indication granularity of the second information is greater than the indication granularity of the first information; and a value range of the part of the time information that is of the first reference point in the universal clock and that is indicated by the first information is any one of [-N, 0], [-N, 0), (-N, 0], (-N, 0), [-N/2, N/2], (-N/2, N/2], (-N/2, N/2), [-N/2, N/2), [0, N], (0, N], [0, N), and (0, N), where n is the indication granularity of the second information.

With reference to the first aspect or the foregoing possible implementations, in another possible implementation, the method includes: sending information used to indicate the indication granularity of the first information by using any one of the system message, the dedicated RRC signaling, the MAC layer signaling, and the physical layer signaling.

With reference to the first aspect or the foregoing possible implementations, in another possible implementation, if the first information is sent by using the system message, the time unit is any one of a symbol, a slot, a subframe, a radio frame, a superframe, a system message window, a system message period, and a system message change period; and if the first information is sent by using at least one of the dedicated RRC signaling, the MAC layer signaling, and the physical layer signaling, the time unit is any one of the symbol, the slot, the subframe, the radio frame, the superframe, a search space period, and a discontinuous reception period.

With reference to the first aspect or the foregoing possible implementations, in another possible implementation, before the sending first information, the method further includes: receiving an application message, where the application message is used to apply for the first information.

According to a second aspect of the embodiments of this application, a time information transmission method is provided, including: receiving first information whose indication granularity is less than or equal to 5 milliseconds, where the first information is used to indicate time information of a first reference point; and determining time of the first reference point based on the first information. A receiving entity that receives the first information may be a terminal device, or may be a chip of the terminal device. A sending entity that sends the first information may be a network device, or may be a chip of the network device. According to the time information transmission method provided in this embodiment of this application, the indication granularity of the indication information is reduced, so that precision of the indication granularity of the indication information is improved compared with the prior art. High-precision time information is transmitted to the receiving entity, so that the receiving entity determines time based on the high-precision time information, and an error between time determined by the receiving entity and time of the sending entity is reduced, so that the receiving entity meets a time synchronization requirement in an industrial communication scenario.

With reference to the second aspect, in a possible implementation, where that the first information is used to indicate time information of a first reference point includes: the first information is used to indicate the time information of the first reference point in a universal clock; or the first information is used to indicate a part of the time information of the first reference point in a universal clock.

With reference to the second aspect or the foregoing possible implementations, in another possible implementation, the receiving first information includes: receiving the first information by using a system message; or receiving the first information by using at least one of dedicated radio resource control RRC signaling, media access control MAC layer signaling, and physical layer signaling.

With reference to the second aspect or the foregoing possible implementations, in another possible implementation, the first reference point is a boundary of a time unit corresponding to a time domain position at which the first information is sent for a first time.

With reference to the second aspect or the foregoing possible implementations, in another possible implementation, the first reference point corresponds to information content in the first information, and/or the first reference point corresponds to content in DCI used for scheduling the first information.

With reference to the second aspect or the foregoing possible implementations, in another possible implementation, where the first information is used to indicate a part of the time information of the first reference point in a universal clock further includes: receiving second information by using the system message, where the second information is used to indicate the time information of the first reference point; an indication granularity of the second information is greater than the indication granularity of the first information; and a value range of the part of the time information that is of the first reference point in the universal clock and that is indicated by the first information is any one of [-N, 0], [-N, 0), (-N, 0], (-N, 0), [-N/2, N/2], (-N/2, N/2], (-N/2, N/2), [-N/2, N/2), [0, N], (0, N], [0, N), and (0, N), where n is the indication granularity of the second information.

With reference to the foregoing possible implementations, in another possible implementation, where the determining time of the first reference point based on the first information includes: determining the time of the first reference point based on the first information and the second information.

With reference to the second aspect or the foregoing possible implementation, in another possible implementation, the method further includes: receiving information used to indicate the indication granularity of the first information by using any one of the system message, the dedicated RRC signaling, the MAC layer signaling, and the physical layer signaling.

With reference to the second aspect or the foregoing possible implementations, in another possible implementation, before the receiving first information, the method further includes: sending an application message, where the application message is used to apply for the first information.

According to a third aspect of the embodiments of this application, a wireless communications apparatus is provided. The wireless communications apparatus is a network device or a chip of the network device, and includes a processing unit, configured to generate first information, where the first information is used to indicate time information of a first reference point, and an indication granularity of the first information is less than or equal to 5 milliseconds; and a sending unit, configured to send the first information.

According to a fourth aspect of the embodiments of this application, a wireless communications apparatus is provided. The wireless communications apparatus is a terminal device or a chip of the terminal device, and includes a receiving unit, configured to receive first information, where the first information is used to indicate time information of a first reference point, and an indication granularity of the first information is less than or equal to 5 milliseconds; and a processing unit, configured to determine time of the first reference point based on the first information.

It should be noted that the functional modules in the third aspect and the fourth aspect may be implemented by hardware, or may be implemented by hardware executing corresponding software. The hardware or software includes one or more modules corresponding to the foregoing functions. For example, a transceiver is configured to complete functions of the receiving unit and the sending unit, a processor is configured to complete functions of the processing unit, and the memory is configured to store a program instruction of the time information transmission method in the embodiments of this application. The processor, the transceiver, and the memory are connected by using a bus and communicate with each other. Specifically, reference may be made to the behavior function of the sending entity in the time information transmission method provided in the first aspect and the behavior function of the receiving entity in the time information transmission method provided in the second aspect.

According to a fifth aspect of the embodiments of this application, wireless communications apparatus is provided, including a processor, a memory, a bus, and a communications interface, where the memory is configured to store a computer-executable instruction, the processor and the memory are connected by using the bus. When the processor runs, the processor executes the computer-executable instruction stored in the memory, to enable the wireless communications apparatus to perform the method according to any one of the foregoing aspects.

According to a sixth aspect of the embodiments of this application, a computer-readable storage medium is provided, including a computer software instruction, where when the computer software instruction runs in the wireless communications apparatus, a network device is enabled to perform the time information transmission method according to any one of the foregoing aspects.

According to a seventh aspect of the embodiments of this application, a computer program product including an instruction is provided. When the computer program product runs in a wireless communications apparatus, the wireless communications apparatus is enabled to perform the time information transmission method according to any one of the foregoing aspects.

In addition, for technical effects brought by the design manners of any one of the foregoing aspects, refer to technical effects brought by different design manners of the first aspect. Details are not described herein again.

In the embodiments of this application, names of the wireless communications apparatus, the network device, and the terminal device constitute no limitation on the devices. In actual implementation, these devices may have other names. Provided that functions of each device are similar to those in the embodiments of this application and fall within the scope of the claims of this application and their equivalent technologies.

## BRIEF DESCRIPTION OF DRAWINGS

FIG. 1 is a simplified schematic diagram of a system architecture according to an embodiment of this application;

FIG. 2 is a flowchart of a time information transmission method according to an embodiment of this application;

FIG. 3 is a schematic diagram of a first reference point according to an embodiment of this application;

FIG. 4 is a schematic diagram of another first reference point according to an embodiment of this application;

FIG. 5 is a schematic diagram of still another first reference point according to an embodiment of this application;

FIG. 6 is a flowchart of another time information transmission method according to an embodiment of this application;

FIG. 7 is a flowchart of still another time information transmission method according to an embodiment of this application;

FIG. 8 is a schematic composition diagram of a communications apparatus according to an embodiment of this application;

FIG. 9 is a schematic composition diagram of a device according to an embodiment of this application;

FIG. 10 is a schematic composition diagram of another communications apparatus according to an embodiment of this application;

FIG. 11 is a schematic composition diagram of still another communications apparatus according to an embodiment of this application; and

FIG. 12 is a schematic composition diagram of still another communications apparatus according to an embodiment of this application.

## DESCRIPTION OF EMBODIMENTS

The following describes the implementations of the embodiments of this application in detail with reference to accompanying drawings.

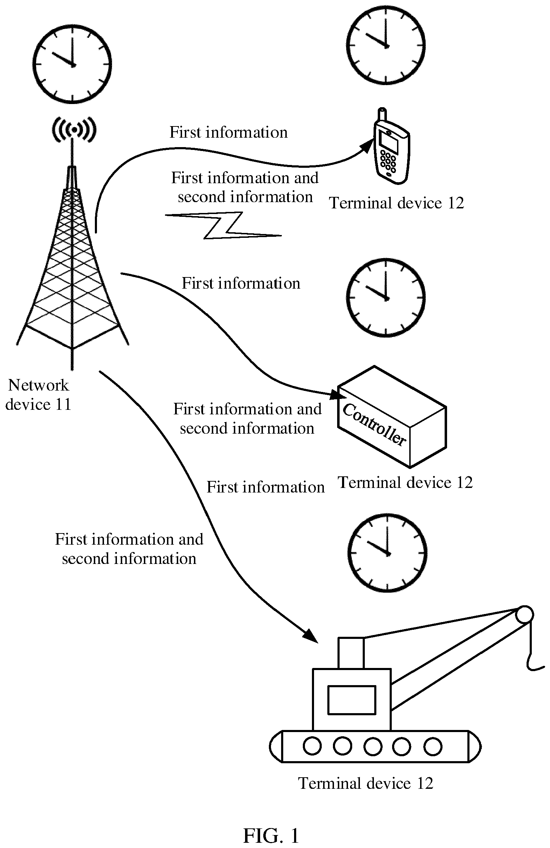

FIG. 1 is a simplified schematic diagram of a system structure to which an embodiment of this application may be applied. As shown in FIG. 1, the system may include a network device 11 and at least one terminal device 12. Each terminal device 12 performs wireless communication with the network device 11 by using a wireless communications technology. The wireless communications technology may be the fourth generation (the fourth generation, 4G) wireless communications technology or the fifth generation (the fifth generation, 5G) mobile communications technology.

The network device may be used as a time synchronization source of the terminal device, so that the terminal device keeps time synchronization with the network device according to the time information transmission method in the embodiments of this application. The network device may be a base station (Base Station, BS), a base station controller, or the like in wireless communication. Alternatively, the network device may be referred to as a transceiver station, a relay station, a transmission reception point (transmission reception point, TRP), or the like. Specifically, the network device is an apparatus that is deployed in a radio access network and that is configured to provide a radio access function for the terminal device 12. The functions of the network device may include one or more of the following functions: radio resource management, paging message organization and sending, broadcast message organization and sending, measurement and measurement report configuration for mobility or scheduling, and the like. In systems using different radio access technologies, names of the device having the network device functions may be different. For example, in a 3G system, the device is referred to as node B (Node B); in a 4G system, the device is referred to as evolved nodeB (evolved NodeB, eNodeB); in a 5G system, the device is referred to as a next generation nodeB (next generation NodeB, gNB); and in a wireless local access system, the device is referred to as an access point (access point). As evolution of communications technologies, the name of the network device may change. A specific technology and a specific device form that are used by the network device are not limited in the embodiments of this application.

The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a tablet, a computer having a wireless transmitting and receiving function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in the embodiments of this application.

In addition, in the embodiments of this application, the terms such as "for example", "such as" are used to represent giving an example, an illustration, or a description. Any embodiment or design scheme described as an "example" or "for example" in the embodiments of this application should not be explained as having more advantages than another embodiment or design scheme. Exactly, use of the word "example" or "for example" or the like is intended to present a concept in a specific manner.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

It should be noted that the "connection" in this application means that mutual communication may be performed, and specifically, the connection may be a connection in a wired manner or may be a connection in a wireless manner. This is not specifically limited in this embodiment of this application. Devices connected to each other may be directly connected, or may be connected by using another device. This is not specifically limited in this embodiment of this application.

To resolve a problem that an error is relatively large after the terminal device performs time synchronization, a time information transmission method is provided in this embodiment of this application. A basic principle of the method is as follows: a sending entity generates and sends first information whose indication granularity is less than or equal to 5 milliseconds, where the first information is used to indicate time information of a first reference point; after receiving the first information whose indication granularity is less than or equal to 5 milliseconds, a receiving entity determines time of the first reference point based on the first information. The sending entity that sends the first information may be the network device, or may be a chip of the network device. The receiving entity that receives the first information may be the terminal device, or may be a chip of the terminal device. According to the time information transmission method provided in this embodiment of this application, the indication granularity of the indication information is reduced, so that precision of the indication granularity of the indication information is improved compared with the prior art. High-precision time information is transmitted to the receiving entity, so that the receiving entity determines time based on the high-precision time information, and an error between time determined by the receiving entity and time of the sending entity is reduced, so that the receiving entity meets a time synchronization requirement in an industrial communication scenario.

For ease of understanding, it is assumed in the following embodiments of this application that the sending entity is a network device and the receiving entity is a terminal device. Communication between the network device and the terminal device is used as an example for description.

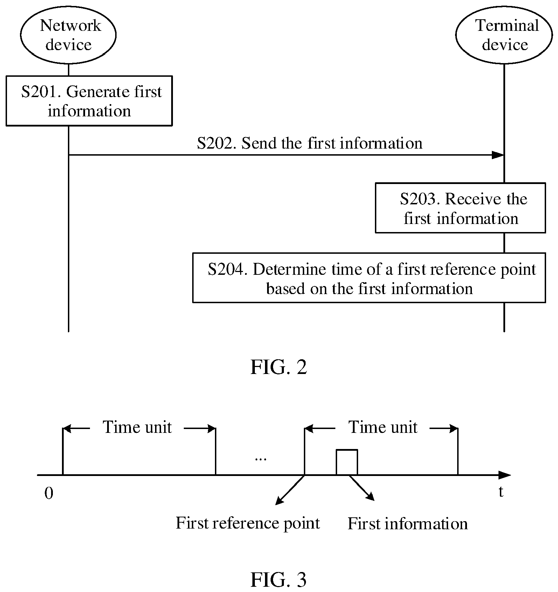

FIG. 2 is a flowchart of a time information transmission method according to an embodiment of this application. As shown in FIG. 2, the method may include the following steps.

S201: A network device generates a first signal.

The first information is used to indicate time information of a first reference point. The first reference point is a time reference point, and corresponds to a time domain position at which the first information is sent. It may be understood that the first reference point is a boundary of a time unit corresponding to the time domain position at which the first information is sent.

In a possible implementation, the time unit corresponding to the time domain position of the first information is a time unit in which the time domain position at which the first information is sent for a first time is located. The first reference point is the boundary of the time unit in which the time domain position at which the first information is sent for the first time is located. The boundary of the time unit may be a left boundary of the time unit or may be a right boundary of the time unit. Whether the boundary of the time unit is the left boundary of the time unit or the right boundary of the time unit may be preset. This is not limited in this embodiment of this application. FIG. 3 is a schematic diagram of a first reference point according to an embodiment of this application.

It should be noted that, if the network device sends the first information to a terminal device by using a system message, the time unit in which the time domain position at which the first information is sent for the first time is located may be understood as a time unit in which the time domain position at which the first information is sent for the first time in a preset time period is located, the preset time period may be a system message window, a system message sending period, a system message change period, or the like. The system information window, the system information sending period, or the system information change period is preconfigured by the network device. Certainly, the preset time period may alternatively be a predefined time window. For example, a length of the predefined time window may be 5.12 seconds, 10.24 seconds, or the like.

If the network device sends the first information to the terminal device by using at least one of dedicated RRC signaling, MAC layer signaling, and physical layer signaling, the time unit in which the time domain position at which the first information is sent for the first time is located may be understood as a time unit in which the time domain position at which the first information is sent for the first time in a search space period or a discontinuous reception period corresponding to the first information is located. Certainly, it may also be considered as the time unit in which the time domain position at which the first information is sent for the first time in the preset time period is located.

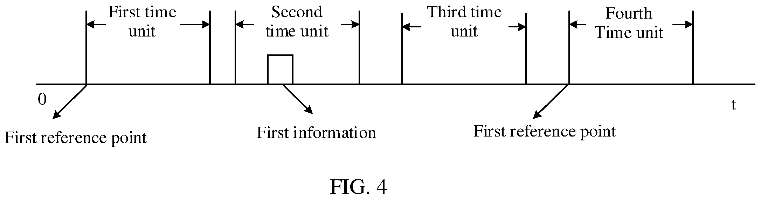

In another possible implementation, the first reference point is a boundary of an $S^{th}$ time unit before or after the time unit corresponding to the time domain position at which the first information is sent, and S is a positive integer greater than or equal to 1. As shown in FIG. 4, it is assumed that the time unit corresponding to the time domain position at which the first information is sent is the second time unit, the first reference point is a boundary of the first time unit before the second time unit, that is, the boundary of the first time unit shown in FIG. 4; or the first reference point is a boundary of the second time unit after the second time unit, that is, a boundary of the fourth time unit shown in FIG. 4. It should be noted that there may be an interval between adjacent time units, or there may be no interval between adjacent time units. For example, there is an interval between the adjacent time units shown in FIG. 4. This is not limited in this embodiment of this application.

In addition, a rule that the first reference point corresponds to the time domain position at which the first information is sent may be predefined. Therefore, the first reference point determined by the terminal device according to the predefined rule is the same as the first reference point determined by the network device, and the network device does not need to notify the terminal device of the first reference point by using a signaling message, thereby reducing signaling resource overheads.

However, because of factors such as signal quality, the terminal device may fail to receive signaling (such as the dedicated RRC signaling, the MAC signaling, and the physical layer signaling) that is of a non-system message and that is sent by the network device to the terminal device. For example, the terminal device fails to receive a physical downlink control channel (physical downlink control channel, PDCCH) used to schedule initially transmitted first information. In this case, the network device needs to retransmit the first information to the terminal device, for example, perform retransmission by using a hybrid automatic repeat request (hybrid automatic repeat request, HARQ) technology. However, during retransmission, the first information generally does not change. After receiving the first information, the terminal device does not determine that the first reference point is the boundary of the time unit corresponding to which time domain position at which the first information is sent, to be specific, does not determine whether the first reference point is the boundary of the time unit corresponding to the time domain position at which the first information is sent for the first time or the boundary of the time unit corresponding to the time domain position at which the first information is repeatedly transmitted. For example, initial transmission and retransmission cross a boundary of one time unit. In other words, the initial transmission is performed in a previous time unit, and retransmission is performed in a next time unit. Assuming that the first reference point represents the left boundary of a time unit in which initially transmitted data is located. After the terminal device fails to receive the initially transmitted time unit and successfully receives the retransmitted time unit, the terminal device does not know which time unit in which the retransmission is performed, because the terminal device does not receive the PDCCH used to schedule the initially transmitted first information. In this case, the terminal device receives retransmitted information successfully in the next time unit, but does not know whether initially transmitted information corresponding to the terminal device is in the same time unit as the retransmitted information or in the previous time unit of the time unit in which the retransmission is performed.

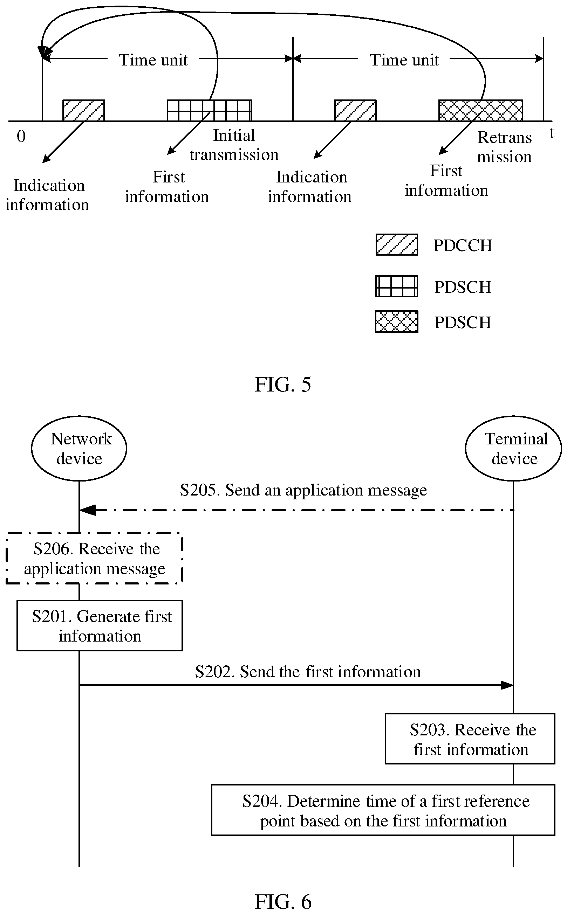

Before sending the first information to the terminal device, the network device needs to send scheduling information to the terminal device. To avoid blurring of the first reference point caused by the retransmission, the first reference point may correspond to content in DCI used for scheduling the first information. For example, as shown in FIG. 5, the DCI that is sent by the network device to the terminal device and that is used to schedule the first information may include indication information. The indication information is used to indicate the time unit and/or boundary information of the time unit.

For example, the DCI includes one bit. When the bit is 1, it indicates that the first reference point is a boundary of a time unit before or a boundary of a time unit after the time unit in which the time domain position at which the first information is sent is located. When the bit is 0, it indicates that the first reference point is the boundary of the time unit in which the time domain position at which the first information is sent is located. Alternatively, when the bit is 0, it indicates that the first reference point is a boundary of a time unit before or a boundary of a time unit after the time unit in which the time domain position at which the first information is sent is located. When the bit is 1, it indicates that the first reference point is the boundary of the time unit in which the time domain position at which the first information is sent is located. It should be noted that the boundary of the time unit may be the left boundary of the time unit or the right boundary of the time unit, and whether the boundary of the time unit is the left boundary of the time unit or the right boundary of the time unit may be preset. Certainly, the boundary information of the time unit may alternatively be carried in the indication information. For example, the DCI further includes one bit, and the bit is used to indicate the boundary information of the time unit that is determined based on the indication information included in the DCI. That the bit is 1 indicates the left boundary of the time unit determined based on the indication information included in the DCI; and that the bit is 0 indicates the right boundary of the time unit determined based on the indication information included in the DCI. Alternatively, that the bit is 0 indicates the left boundary of the time unit determined based on the indication information included in the DCI; and that the bit is 1 indicates the right boundary of the time unit determined based on the indication information included in the DCI. The two bits included in the DCI may belong to a same field (field), or may belong to different fields.

If the indication information indicates only boundary information of the time unit, the time unit may be determined according to a preset rule, where the preset rule may be the time unit corresponding to the time domain position at which the first information is sent. The time unit corresponding to the time domain position at which the first information is sent may be understood as the time unit in which the time domain position at which the first information is sent is located or the $S^{th}$ time unit before or after the time unit corresponding to the time domain position at which the first information is sent. For specific detailed interpretations, refer to descriptions in the foregoing embodiment. Details are not described again in this embodiment of this application. The boundary information of the time unit may be implemented in a manner of indicating the bit included in the DCI. For example, the DCI may include one bit, and the bit is used to indicate the boundary of the time unit determined according to the preset rule. That the bit is 1 indicates the left boundary of the time unit determined according to the preset rule; and that the bit is 0 indicates the right boundary of the time unit determined according to the preset rule. Alternatively, that the bit is 0 indicates the left boundary of the time unit determined according to the preset rule; and that the bit is 1 indicates the right boundary of the time unit determined according to the preset rule. Therefore, the terminal device determines the time domain position of the first reference point with reference to the indication information in the DCI used for scheduling the first information and the time domain position of the first information. The time domain position of the first information is the time domain position of a PDSCH of the first information scheduled by the PDCCH.

In addition to that the default rule corresponding to the first reference point and the time domain position at which the first information is sent may be predefined, the first reference point may correspond to information content in the first information. For example, the first information includes the indication information, and the indication information included in the first information may be used to indicate information of the time unit. The information of the time unit may be an index of the time unit. For example, when the time unit is a radio frame, the information of the time unit may be a radio frame number or the like. The boundary information of the time unit may be the left boundary of the time unit or the right boundary of the time unit. The boundary information of the time unit may be agreed on in advance. Alternatively, the indication information included in the first information may carry the boundary information of the time unit, or the indication information included in the DCI used for scheduling the first information carries the boundary information of the time unit. Therefore, the terminal device may determine the time domain position of the first reference point based on the indication information included in the first information and the time domain position of the first information. Alternatively, the terminal device may determine the time domain position of the first reference point based on the indication information included in the DCI used for scheduling the first information, the indication information included in the first information, and the time domain position of the first information.

It should be noted that when the first information includes the indication information used to indicate the time unit information, the time unit in which the first reference point is located may further be determined with reference to the preset rule. For example, when the indication information included in the first information indicates the index of the time unit, a rule for determining the time unit in which the first reference point is located may be that the determined time unit needs to meet a condition 1 and a condition 2, where the condition 1 is that an index number of the determined time unit is the same as the index number indicated by the indication information included in the first information; and the condition 2 is that a time distance between the determined time unit and a time unit in which the time domain position at which the first information is sent is located is the closest in all time units that meet the condition 1. For another example, the rule for determining the time unit in which the first reference point is located may alternatively be that the determined time unit is a time unit that is after the time unit in which the time domain position at which the first information is sent is located and whose $A^{th}$ index number is a time unit index indicated by the indication information included in the first information, where A is a preset positive integer. For another example, the rule for determining the time unit in which the first reference point is located may alternatively be that the determined time unit is a time unit that is before the time unit in which the time domain position at which the first information is sent is located and whose $B^{th}$ index number is a time unit index indicated by the indication information included in the first information, where B is a preset positive integer.

In mobile communications systems of different standards, concepts of the time unit may be different. For example, the time unit may be a symbol, a slot, a subframe, a radio frame, or a superframe. Certainly, the time unit may also be another predefined time period.

The time information of the first reference point in this embodiment of this application may be time information of the first reference point in a universal clock. The universal clock may be at least one of a coordinated universal time (coordinated universal time, UTC) clock, a world clock, a global positioning system (global positioning system, GPS) clock, an international clock, or a local clock. Alternatively, the universal clock may be another public clock. The public clock is a clock that can be obtained by any individual and organization. Moreover, it is unique. In other words, time of the public clock obtained by different individuals and organizations is consistent.

After determining the first reference point, the network device needs to generate the time information of the first reference point. For a specific method for generating the time information of the first reference point, refer to the prior art. This is not limited in this embodiment of this application. The following uses an example to describe how to generate the first information. To facilitate digital transmission, quantization processing may be performed on a time reference point to generate the time information of the first reference point.

For example, it is assumed that 00:00:00 on January 2, 1900 needs to be indicated. In this case, 00:00:00 on January 2, 1900 may be considered as time of the first reference point. How to quantize 00:00:00 on January 2, 1900 is described in the following. It is assumed that start time is 00:00:00 on January 1, 1900 in the Gregorian calendar, and the indication granularity of the first information is 10 milliseconds. In this case, the time information at 00:00:00 on January 2, 1900 may be quantized to 24*3600*100 = 8640000. Because at 00:00:00 on January 2, 1900, one day has passed from 00:00:00 on January 1, 1900, a quantity of 10 milliseconds in a day is 8640000. The foregoing represented in a form of a formula is: It is assumed that a UTC time point of the reference time point is $T_c$, and $T_c$ may also be understood as the start time; a UTC time (time point information that needs to be transmitted) of a target time point is $T_m$, and $T_m$ may also be understood as the time of the first reference point; and the indication granularity of the first information is $\Delta T_1$. In this case, the quantized target time point may be $\left\lfloor \dfrac{T_m - T_c}{\Delta T_1} \right\rfloor$ or $\left\lfloor \dfrac{T_c - T_m}{\Delta T_1} \right\rfloor$. The

time information may not be limited to the foregoing form, for example, may alternatively be rounded off or rounded up. However, it may be confirmed that the time information is the time information used to indicate the target time.

If the time information of the first reference point is the time information of the first reference point in the universal clock, the time information indicated by the first information is, represented in a form of a formula,

$$k_1 = \left\lfloor \frac{T_m - T_c}{\Delta T_1} \right\rfloor \text{ or } k_1 = \left\lfloor \frac{T_c - T_m}{\Delta T_1} \right\rfloor,$$ $\Delta T_1$ is the indica-

tion granularity of the first information, and $k_1$ is the time information of the first reference point.

It should be noted that the indication granularity of the first information in this embodiment of this application may be any time unit less than or equal to 5 milliseconds. For example, the indication granularity of the first information may be any one of Q milliseconds (millisecond, ms), Q*100 microseconds (microsecond, us), Q*10 microseconds, Q microseconds, Q*100 nanoseconds (nanosecond, ns), Q*10 nanoseconds, and Q nanoseconds, where q is a positive integer.

S202: The network device sends first information to the terminal device.

The network device may send the first information to the terminal device by using downlink signaling. The downlink signaling includes RRC signaling, the MAC layer signaling, or the physical layer signaling. The RRC signaling includes the dedicated RRC signaling or system information, and the system information may also be referred to as the system message. The MAC layer signaling may be MAC control element (control element, CE) signaling. The physical layer signaling may be explicitly or implicitly indicated by using the DCI, or may be implicitly indicated by using a downlink reference signal. The implicit indication of the DCI may be understood as scrambling a cyclic redundancy check (cyclic redundancy check, CRC) of the DCI by using different binary fields or sequences, to implement a method for carrying target information. The implicit indication of the downlink reference signal may achieve, in at least one of the following forms, an effect of using the implicit indication of the reference signal: First, the reference signal is carried on different resources, the resources may be radio transmission resources, and the radio transmission resources include at least one of a time resource, a frequency resource, a code resource, and a space resource; second, the reference signal is generated by using different generation methods, for example, by using different sequence general term expressions. The network device may send the downlink signaling to the terminal device in a broadcast manner, that is, send the downlink signaling to all terminal devices in a cell. The network device may further send the downlink signaling to the terminal device in a multicast manner (group common (group common)), that is, send the downlink signaling to all terminal devices in a group. The network device may further send the downlink signaling to a single terminal device in a unicast manner.

If the network device sends the first information to the terminal device in the broadcast manner, the network device can send the first information to the terminal device by using the system message. If the network device sends the first information to the terminal device in the unicast manner, the network device can send the first information to the terminal device by using at least one of the dedicated RRC signaling, the MAC layer signaling and the physical layer signaling. The first information is sent to the terminal device in the unicast mode, thereby improving security of time information transmission, and preventing the time information from being tampered with, attacked, or the like.

In addition, the network device may alternatively send the information used to indicate the indication granularity of the first information, to the terminal device by using any one of the system message, the dedicated RRC signaling, the MAC layer signaling, and the physical layer signaling.

S203: The terminal device receives the first information sent by the network device.

The first information is used to indicate the time information of the first reference point, and the indication granularity of the first information is less than or equal to 5 milliseconds. For related interpretations of the first information, refer to detailed descriptions of S201 and S202. Details are not described again in this embodiment of this application.

S204: The terminal device determines the time of the first reference point based on the first information.

After receiving the first information sent by the network device, the terminal device first needs to determine the first reference point, and then, determine the time of the first reference point based on the first reference point. For the method of determining the first reference point, refer to the detailed descriptions in S201. Details are not described again in this embodiment of this application. The first reference point can be determined according to a rule that is corresponding to the first reference point and the time domain position of the first information and that is pre-configured by the network device and the terminal device according to a protocol. Moreover, the first reference point may also be determined based on information corresponding to the first reference point and information corresponding to the information content in the first information, and/or based on the information corresponding to the first reference point and information corresponding to the content in the DCI used for scheduling the first information.

Optionally, the terminal device can actively send an application message to the network device, to request the network device to send the first information to the terminal device. As shown in FIG. 6, before the network device sends the first information to the terminal device, this embodiment of this application further includes the following steps.

S205: The terminal device sends the application message to the network device.

The application message is used for the terminal device to apply for the first information from the network device.

S206: The network device to receive the application message sent by the terminal device.

According to the time information transmission method provided in this embodiment of this application, the indication granularity of the indication information is reduced, so that precision of the indication granularity of the indication information is improved compared with the prior art. High-precision time information is transmitted to the terminal device, so that the terminal device determines time based on the high-precision time information, and an error between time determined by the terminal device and time of the network device is reduced, so that the terminal device meets a time synchronization requirement in an industrial communication scenario.

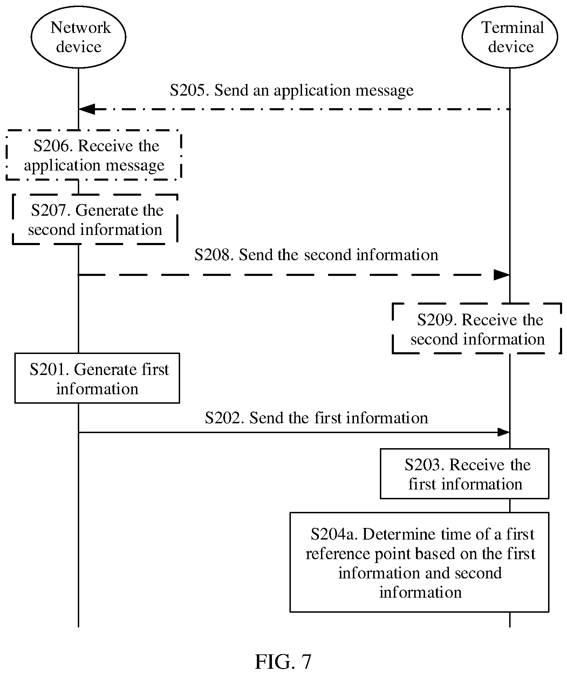

If the first information is used to indicate a part of the time information of the first reference point in a universal clock, it may be understood that the network device sends the first information to the terminal device, and further sends second information to the terminal device. However, there is an error between time of the first reference point determined by the terminal device based on the second information and time of the first reference point actually determined by the network device. In this case, the network device needs to send the first information to the terminal device, and the first information is used to adjust the time of the first reference point determined by the terminal device based on the second information, to reduce the error between the time determined by the terminal device and the time of the network device. As shown in FIG. 7, this embodiment of this application further includes the following steps.

S207: The network device generates the second information.

The second information is used to indicate the time information of the first reference point. The first reference point is a time reference point, and corresponds to a time domain position at which the second information is sent. The time information of the first reference point in this embodiment of this application may be the time information of the first reference point in the universal clock. That is, in this case, the second information may be equivalent to the first information in S201. For other detailed interpretations of the second information, refer to the detailed descriptions in S201. Details are not described again in this embodiment of this application.

It should be noted that an indication granularity of the second information is greater than the indication granularity of the first information. A value range of the part that is of the time information of the first reference point in the universal clock and that is indicated by the first information is any one of [-N, 0], [-N, 0), (-N, 0], (-N, 0), [-N/2, N/2], (-N/2, N/2], (-N/2, N/2), [-N/2, N/2), [0, N], (0, N], [0, N), (0, N), [-N, N], [-N, N), (-N, N], and (-N, N), where n is the indication granularity of the second information, and a unit of N may be any time unit, for example, second, millisecond, microsecond, or nanosecond. For example, N is less than or equal to 10 milliseconds. The symbol "[" indicates greater than or equal to. The symbol "]" indicates less than or equal to. The symbol "(" indicates "greater than". The symbol ")" indicates "less than". For example, [-N, 0] indicates any real number that is greater than or equal to -N and less than or equal to 0. [-N, 0) indicates any real number that is greater than or equal to -N and less than 0. (-N, 0] indicates any real number that is greater than -N and less than or equal to 0. (-N, 0) indicates any real number that is greater than -N and less than 0. [-N/2, N/2] indicates any real number that is greater than or equal to -N/2 and less than or equal to N/2. (-N/2, N/2] indicates any real number that is greater than - N/2 and less than or equal to N/2. (-N/2, N/2) indicates any real number that is greater than -N/2 and less than N/2. [-N/2, N/2) indicates any real number that is greater than or equal to -N/2 and less than N/2. [0, N] indicates any real number that is greater than or equal to 0 and less than or equal to N. (0, N] indicates any real number that is greater than 0 and less than or equal to N. [0, N) indicates any real number that is greater than or equal to 0 and less than N. (0, N) indicates any real number that is greater than 0 and less than N. [-N, N] indicates any real number that is greater than or equal to -N and less than or equal to N. [-N, N) indicates any real number that is greater than or equal to -N and less than N. (-N, N] indicates any real number that is greater than -N and less than or equal to N. (-N, N) indicates any real number that is greater than -N and less than N.

The network device sends, to the terminal device, the first information of the indication granularity of the first information and the second information. The first information may be considered as compensation information, and is used to indicate a deviation between the time information of the first reference point that is indicated by the second information and the time of the network device, and is a compensation for precision of the second information of the indication granularity of the second information. The following uses an example to describe how to generate the first information after the second information is generated.

For example, it is assumed that quantized target time information of the first reference point is 15656565635 ns = 15656565.635 μs = 15656.565635 ms = 1565.6565635 (10 ms), the indication granularity of the second information is 10 ms, and an indication criterion is rounding off. In this case, the time information of the first reference point that is indicated by the second information is 1566, indicating 1566*10 ms = 15660000000 ns. However, there is an error between the time information of the first reference point that is indicated by the second information and the quantized target time information of the first reference point, and the error is 15660000000 ns - 15656565635 ns = 3434365 ns. In the industrial communication scenario, the terminal device cannot accept the error. Therefore, the network device needs to send the first information of the indication granularity of the first information to the terminal device, where the time information carried in the first information is a deviation from the quantized target time information of the first reference point. It is assumed that the indication granularity of the first information is 100 nanoseconds, and the indication criterion is rounding off. In this case, the first information is used to indicate that a deviation value is 34344*100 ns. Therefore, the value carried in the first information is 34344. In this way, with reference to the first information and the second information, the terminal device can obtain that the time information is 1566*10 ms - 34344*100 ns = 15656565600 ns. However, there is still an error in this value, and the error is 15656565600 ns - 15656565635 ns = -35 ns. However, the error -35 ns is relatively small, and can meet a requirement in an application scenario such as industrial communication. The foregoing example is merely an example for description, and a specific indication method, calculation method, and the like are not limited. In actual application, another method may be used. This is not limited in this embodiment of this application.

Represented in a form of a formula, it is assumed that the indication granularity of the second information is $\Delta T_2$, the indication granularity of the first information is $\Delta T_1$, and the time information of the first reference point that is indicated by the second information is

$$k_2 = \left\lfloor \frac{T_m - T_c}{\Delta T_2} \right\rfloor \text{ or } k_2 = \left\lfloor \frac{T_c - T_m}{\Delta T_2} \right\rfloor,$$

so that the time information of the first reference point that is indicated by the first information may be

$$k_1 = \left\lfloor \frac{(T_m - T_c) - k_2 \Delta T_2}{\Delta T_1} \right\rfloor$$

or

$$k_1 = \left\lfloor \frac{(T_c - T_m) - k_2 \Delta T_2}{\Delta T_1} \right\rfloor.$$

Here, the formula represents only a feasible method, this embodiment of this application does not limit the formula form, such as it can be rounded up, rounded off, can be

$$k_1 = \left\lfloor \frac{k_2 \Delta T_2 - (T_m - T_c)}{\Delta T_1} \right\rfloor$$

or

$$k_1 = \left\lfloor \frac{k_2 \Delta T_2 - (T_c - T_m)}{\Delta T_1} \right\rfloor$$

and so on. In summary, the first information is used to indicate a deviation between the target time information and a time value indicated by the second information; or the first information is used to indicate a part (a fractional part or the like) of the target time information in the indication granularity of the second information.

S208: The network device sends the second information to the terminal device.

The network device sends the second information to the terminal device by using the system message. To be specific, the network device sends the second information to the terminal device in the broadcast manner. The network device sends the first information to the terminal device by using at least one of the system information, the dedicated RRC signaling, the MAC layer signaling, and the physical layer signaling.

S209: The terminal device receives the second information sent by the network device.

For related interpretations of the second information, refer to the detailed descriptions in S207. Details are not described again in this embodiment of this application.

S204a: The terminal device determines the time of the first reference point based on the first information and the second information.

After receiving the first information and the second information that are sent by the network device, the terminal device first determines the time of the first reference point based on the second information. For details about determining the time of the first reference point based on the second information, refer to the detailed descriptions in S204. Details are not described again in this embodiment of this application. The terminal device then determines the time of the first reference point based on the time of the first reference point determined based on the first information and the time of the first reference point determined based on the second information. That the time of the first reference point determined by the terminal device based on the time of the first reference point determined based on the first information and the time of the first reference point determined based on the second information may be understood as that the time of the first reference point determined through algebraic operation, for example, addition operation or subtraction operation, between the time of the first reference point determined based on the first information and the time of the first reference point determined based on the second information. Because precision of the time of the first reference point determined based on the time of the first reference point determined based on the first information and the time of the first reference point determined based on the second information is better than precision the time of the first reference point determined based on the second information, the error between the time determined by the terminal device and the time of the network device is reduced.

The following describes how to determine the time of the first reference point based on the first information and the second information in a form of a formula. It is assumed that the time of the first reference point determined by the terminal device based on the second information is $t_2$, $t_2$ may be represented as $t_2 = k_2 \times \Delta T_2$, where $k_2$ is the time information indicated in the second information (a value carried in the second information is not necessarily equal to $k_2$, and may be another value, but the value is in a predefined correspondence with $k_2$, or the like). It is assumed that the time of the first reference point determined by the terminal device based on the first information is $t_1$, $t_1$ may be represented as $t_1 = k_1 \times \Delta T_1$, where $k_1$ is the time information indicated in the first information. It is assumed that the time of the first reference point is $t_3$, the terminal device may determine that the time of the first reference point is $t_3 = t_2 + t_1$. Certainly, the time of the first reference point may alternatively be $t_3 = t_2 - t_1$, depending on formulation of a rule. For example, if the time information carried in the first information is defined as: the time of the first reference point minus the time of the first reference point determined by the terminal device based on the second information, the time of the first reference point is $t_3 = t_2 + t_1$. If the time information carried in the first information is defined as: the time of the first reference point determined by the terminal device based on the second information minus the time of the first reference point, the time of the first reference point is $t_3 = t_2 - t_1$.

It should be noted that a sequence of steps in the time information transmission method provided in this embodiment of this application may be properly adjusted. For example, sequences of S207 and S201 may be interchanged. In other words, the first information is first generated and then the second information is generated. The network device may first send the first information to the terminal device and then send the second information to the terminal device. Likewise, for example, sequences of S209 and S203 may be interchanged, and the terminal device may first receive the first information and then receive the second information. Sequences of the first information and the second information are not limited in this embodiment of this application. Any variation method readily figured out by a person skilled in the art within the technical scope disclosed in this application shall fall within the protection scope of the present invention. Therefore, details are not described again.

The foregoing mainly describes the solutions provided in the embodiments of this application from a perspective of interaction between network elements. It can be understood that, to implement the foregoing functions, the network elements, for example, the network device and the terminal device, include corresponding hardware structures and/or software modules for performing the functions. A person of ordinary skill in the art should easily be aware that, in combination with the examples described in the embodiments disclosed in this specification, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the network device and the terminal device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

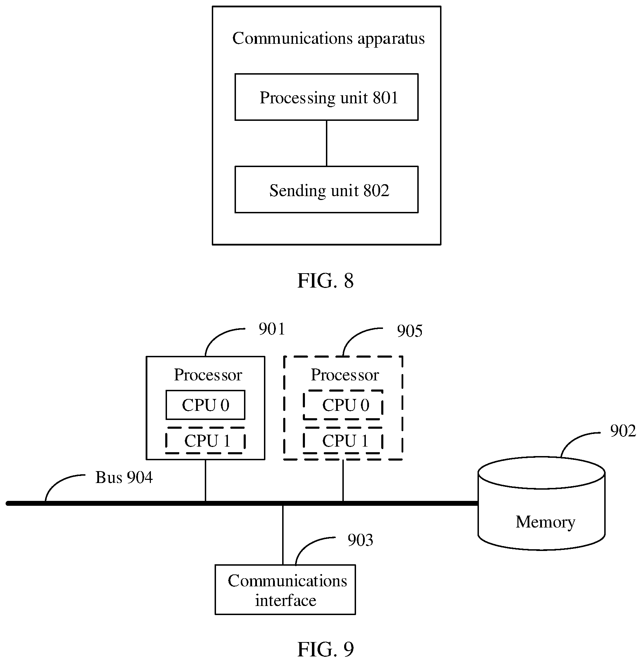

When each functional module is obtained through division based on each corresponding function, FIG. 8 shows a communications apparatus in the foregoing embodiments, to implement functions of the network device in the foregoing method embodiments. In this embodiment of this application, the communications apparatus may be a network device, or may be a chip of the network device. As shown in FIG. 8, the communications apparatus may include a processing unit 801 and a sending unit 802.

The processing unit 801 is configured to support the communications apparatus in performing S201 in the time information transmission method shown in FIG. 2, S201 in the time information transmission method shown in FIG. 6, and S201 and S207 in the time information transmission method shown in FIG. 7.

The sending unit 802 is configured to support the communications apparatus in performing S202 in the time information transmission method shown in FIG. 2, S202 in the time information transmission method shown in FIG. 6, and S202 and S208 in the time information transmission method shown in FIG. 7.

It should be noted that all related content of the steps in the foregoing method embodiments may be cited in function descriptions of corresponding functional modules. Details are not described herein again.

The communications apparatus provided in this embodiment of this application is configured to perform the foregoing time information transmission method, and therefore can achieve a same effect as the foregoing time information transmission method.

FIG. 9 is a schematic composition diagram of a device according to an embodiment of this application. As shown in FIG. 9, the device may include at least one processor 901, a memory 902, a communications interface 903, and a communications bus 904.

The following describes each component of the device in detail with reference to FIG. 9.

The processor 901 is a control center of the device, and may be one processor, or may be a collective name of a plurality of processing elements. For example, the processor 901 may be a central processing unit (central processing unit, CPU), or an application specific integrated circuit (application specific integrated circuit, ASIC), or may be configured as one or more integrated circuits implementing this embodiment of this application, for example, one or more microprocessors (digital signal processor, DSP) or one or more field programmable gate arrays (field programmable gate array, FPGA).

The processor 901 may execute various functions of the device by running or executing a software program stored in the memory 902 and invoking data stored in the memory 902.

In a specific implementation, in an embodiment, the processor 901 may include one or more CPUs, for example, CPU 0 and CPU 1 that are shown in FIG. 9.

The processor in this embodiment of this application is mainly configured to generate first information, where the first information is used to indicate time information of a first reference point, and an indication granularity of the first information is less than or equal to 5 milliseconds.

In specific implementation, in an embodiment, the device may include a plurality of processors, for example, the processor 901 and a processor 905 shown in FIG. 9. Each of the processors may be a single-core processor, or may be a multi-core processor.

The memory 902 may be a read-only memory (Read-Only Memory, ROM) or another type of static storage device capable of storing static information and an instruction, a random access memory (Random Access Memory, RAM) or another type of dynamic storage device capable of storing information and an instruction, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that is capable of carrying or storing expected program code in a form of an instruction or a data structure and that can be accessed by a computer. However, this application is not limited thereto. The memory 902 may exist independently and is connected to the processor 901 by using the communications bus 904. The memory 902 may alternatively be integrated with the processor 901.

The memory 902 is configured to store a software program for executing a solution of this application, and the processor 901 controls the execution of the software program.

The communications interface 903 is configured to communicate with another device or a communications network, for example, an Ethernet, a radio access network (radio access network, RAN), or a wireless local area network (wireless local area network, WLAN). The communications interface 903 may include a receiving unit for implementing a receiving function and a sending unit for implementing a sending function. The communications interface in this embodiment of this application is mainly configured to send the first information to a terminal device.

The communications bus 904 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of the bus.

A structure of the device shown in FIG. 9 does not constitute a limitation on the device. The device may include components more or fewer than those shown in the figure, or may combine some components, or may have different component arrangements.

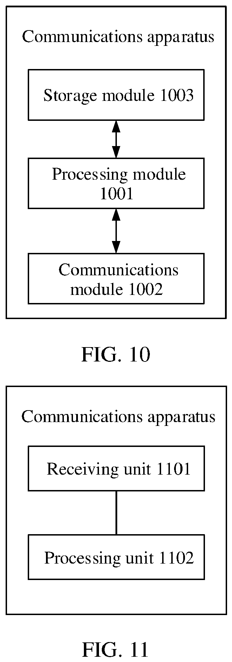

When an integrated unit is used, FIG. 10 shows another communications apparatus in the foregoing embodiments, to implement functions of the network device in the foregoing method embodiments. In this embodiment of this application, the communications apparatus may be a network device, or may be a chip of the network device. As shown in FIG. 10, the communications apparatus includes a processing module 1001 and a communications module 1002.

The processing module 1001 is configured to control and manage an action of the communications apparatus. For example, the processing module 1001 is configured to support the communications apparatus in performing S201 in the time information transmission method shown in FIG. 2, S201 in the time information transmission method shown in FIG. 6, S201 and S207 in the time information transmission method shown in FIG. 7 and/or another process of the technology described in this specification. The communications module 1002 is configured to support the communications apparatus in communicating with another network entity, for example, communicating with the functional module or the network entity shown in FIG. 1. The communications apparatus may further include a storage module 1003, configured to store program code and data of the communications apparatus.

The processing module 1001 may be a processor or a controller. The processor may implement or execute various example logical blocks, modules, and circuits described with reference to content disclosed in this application. The processor may also be a combination of processors implementing a computing function. The communications module 1002 may be a transceiver, a transceiver circuit, a communications interface, or the like. The storage module 1003 may be a memory.

When the processing module 1001 is a processor, the communications module 1002 is a communications interface, and the storage module 1003 is a memory, the communications apparatus in this embodiment of this application may be the device shown in FIG. 9.

When each functional module is obtained through division based on each corresponding function, FIG. 11 shows another communications apparatus in the foregoing embodiments, to implement functions of the terminal device in the foregoing method embodiments. In this embodiment of this application, the communications apparatus may be a terminal device, or may be a chip of the terminal device. As shown in FIG. 11, the communications apparatus may include a receiving unit 1101 and a processing unit 1102.

The receiving unit 1101 is configured to support the communications apparatus in performing S203 in the time information transmission method shown in FIG. 2, S203 in the time information transmission method shown in FIG. 6, and S203 and S209 in the time information transmission method shown in FIG. 7.

The processing unit 1102 is configured to support the communications apparatus in performing S204 in the time information transmission method shown in FIG. 2, S204 in the time information transmission method shown in FIG. 6, and S204a in the time information transmission method shown in FIG. 7.

It should be noted that all related content of the steps in the foregoing method embodiments may be cited in function descriptions of corresponding functional modules. Details are not described herein again.

The communications apparatus provided in this embodiment of this application is configured to perform the foregoing time information transmission method, and therefore can achieve a same effect as the foregoing time information transmission method.

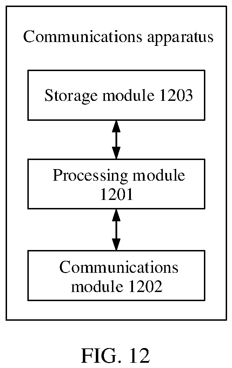

When an integrated unit is used, FIG. 12 shows still another communications apparatus in the foregoing embodiments, to implement functions of the network device in the foregoing method embodiments. In this embodiment of this application, the communications apparatus may be a network device, or may be a chip of the network device. As shown in FIG. 12, the communications apparatus includes a processing module 1201 and a communications module 1202.

The processing module 1201 is configured to control and manage an action of the communications apparatus. For example, the processing module 1201 is configured to support the communications apparatus in performing S204 in the time information transmission method shown in FIG. 2, S204 in the time information transmission method shown in FIG. 6, S204a in the time information transmission method shown in FIG. 7 and/or another process of the technology described in this specification. The communications module 1202 is configured to support the communications apparatus in communicating with another network entity, for example, communicating with the functional module or the network entity shown in FIG. 1. The communications apparatus may further include a storage module 1203, configured to store program code and data of the communications apparatus.

The processing module 1201 may be a processor or a controller. The processor may implement or execute various example logical blocks, modules, and circuits described with reference to content disclosed in this application. The processor may also be a combination of processors implementing a computing function. The communications module 1202 may be a transceiver, a transceiver circuit, a communications interface, or the like. The storage module 1203 may be a memory.

When the processing module 1201 is a processor, the communications module 1202 is a transceiver, and the storage module 1203 is a memory, the communications apparatus in this embodiment of this application may be the device shown in FIG. 9.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor to perform all or some of the steps of the methods described in the embodiments of this application. The foregoing storage medium includes: any medium that can store program code, such as a universal serial bus flash disc, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A time information transmission method, comprising:

   generating first information, wherein the first information is used to indicate time information of a first reference point, an indication granularity of the first information is less than or equal to 5 milliseconds, and the indication granularity of the first information is $Q*10$ nanoseconds, wherein Q is a positive integer; and
   sending the first information.

2. The method according to claim 1, wherein that the first information is used to indicate time information of a first reference point comprises:

   the first information is used to indicate the time information of the first reference point in a universal clock; or
   the first information is used to indicate a part of the time information of the first reference point in a universal clock.

3. The method according to claim 1 or 2, wherein the sending the first information comprises:

   sending the first information by using a system message; or
   sending the first information by using at least one of dedicated radio resource control RRC signaling, media access control MAC layer signaling, and physical layer signaling.

4. The method according to any one of claims 1 to 3, wherein the first reference point is a boundary of a time unit corresponding to a time domain position at which the first information is sent.

5. The method according to claim 4, wherein when the first information is sent by using the system message, the first reference point is a boundary of a time unit corresponding to a time domain position at which the first information is sent for the first time in a preset time period.

6. The method according to claim 4 or 5, wherein the first information comprises indication information used to indicate an index of the time unit.

7. The method according to claim 6, wherein the time unit in which the first reference point is located is a time unit that is of first time units meeting a first condition and that is closest to the time unit in which the first information is sent, wherein the first condition is that an index number of the first time unit is the same as an index number indicated in the indication information.

8. A time information transmission method, comprising:

   receiving first information, wherein the first information is used to indicate time information of a first reference point, an indication granularity of the first information is less than or equal to 5 milliseconds, and the indication granularity of the first information is $Q*10$ nanoseconds, wherein Q is a positive integer; and
   determining time of the first reference point based on the first information.

9. The method according to claim 8, wherein that the first information is used to indicate time information of a first reference point comprises:

   the first information is used to indicate the time information of the first reference point in a universal clock; or
   the first information is used to indicate a part of the time information of the first reference point in a universal clock.

10. The method according to claim 8 or 9, wherein the receiving first information comprises:

receiving the first information by using a system message; or
receiving the first information by using at least one of dedicated radio resource control RRC signaling, media access control MAC layer signaling, and physical layer signaling.

11. The method according to any one of claims 8 to 10, wherein the first reference point is a boundary of a time unit corresponding to a time domain position at which the first information is sent.

12. The method according to claim 11, wherein when the first information is sent by using the system message, the first reference point is a boundary of a time unit corresponding to a time domain position at which the first information is sent for the first time in a preset time period.

13. The method according to claim 11 or 12, wherein the first information comprises indication information used to indicate an index of the time unit.

14. The method according to claim 13, wherein the time unit in which the first reference point is located is a time unit that is of first time units meeting a first condition and that is closest to the time unit in which the first information is sent, wherein the first condition is that an index number of the first time unit is the same as an index number indicated in the indication information.

15. A wireless communications apparatus, comprising:

a processing unit, configured to generate first information, wherein the first information is used to indicate time information of a first reference point, an indication granularity of the first information is less than or equal to 5 milliseconds, and the indication granularity of the first information is Q*10 nanoseconds, wherein Q is a positive integer; and
a sending unit, configured to send the first information to the first node.

16. The apparatus according to claim 15, wherein that the first information is used to indicate time information of a first reference point comprises:

the first information is used to indicate the time information of the first reference point in a universal clock; or

the first information is used to indicate a part of the time information of the first reference point in a universal clock.

17. The apparatus according to claim 15 or 16, wherein the sending unit is specifically configured to:

send the first information by using a system message; or
send the first information by using at least one of dedicated radio resource control RRC signaling, media access control MAC layer signaling, and physical layer signaling.

18. The apparatus according to any one of claims 15 to 17, wherein the first reference point is a boundary of a time unit corresponding to a time domain position at which the first information is sent.

19. The apparatus according to claim 18, wherein when the first information is sent by using the system message, the first reference point is a boundary of a time unit corresponding to a time domain position at which the first information is sent for the first time in a preset time period.

20. The apparatus according to claim 18 or 19, wherein the first information comprises indication information used to indicate an index of the time unit.

21. The apparatus according to claim 20, wherein the time unit in which the first reference point is located is a time unit that is of first time units meeting a first condition and that is closest to the time unit in which the first information is sent, wherein the first condition is that an index number of the first time unit is the same as an index number indicated in the indication information.

22. A wireless communications apparatus, comprising:

a receiving unit, configured to receive first information, wherein the first information is used to indicate time information of a first reference point, an indication granularity of the first information is less than or equal to 5 milliseconds, and the indication granularity of the first information is Q*10 nanoseconds, wherein Q is a positive integer; and
a processing unit, configured to determine time of the first reference point based on the first information.

23. The apparatus according to claim 22, wherein that the first information is used to indicate time information of a first reference point comprises:

the first information is used to indicate the time information of the first reference point in a universal clock; or
the first information is used to indicate a part of the time information of the first reference point in a universal clock.

24. The apparatus according to claim 22 or 23, wherein the receiving unit is specifically configured to:

    receive the first information by using a system message; or
receive the first information by using at least one of dedicated radio resource control RRC signaling, media access control MAC layer signaling, and physical layer signaling.

25. The apparatus according to any one of claims 22 to 24, wherein the first reference point is a boundary of a time unit corresponding to a time domain position at which the first information is sent.

26. The apparatus according to claim 25, wherein when the first information is sent by using the system message, the first reference point is a boundary of a time unit corresponding to a time domain position at which the first information is sent for the first time in a preset time period.

27. The apparatus according to claim 25 or 26, wherein the first information comprises indication information used to indicate an index of the time unit.

28. The apparatus according to claim 27, wherein the time unit in which the first reference point is located is a time unit that is of first time units meeting a first condition and that is closest to the time unit in which the first information is sent, wherein the first condition is that an index number of the first time unit is the same as an index number indicated in the indication information.

29. A wireless communications apparatus, comprising a processor and a memory, wherein the memory is configured to store an instruction, and the processor is configured to execute the instruction to enable the wireless communications apparatus to perform the method according to any one of claims 1 to 7 or the method according to any one of claims 8 to 14.

30. A computer-readable storage medium, comprising a computer software instruction, wherein
when the computer software instruction runs in a wireless communications apparatus, the wireless communications apparatus is enabled to perform the method according to any one of claims 1 to 7 or the method according to any one of claims 8 to 14.

31. A wireless communications apparatus, comprising a processor and an interface circuit, wherein the processor is coupled to the interface circuit, and the interface circuit is configured to communicate with another communications apparatus; and the processor is configured to perform the method according to any one of claims 1 to 7 or the method according to any one of claims 8 to 14.

First information

First information and
second information    Terminal device 12

First information

First information and
second information    Terminal device 12

Network
device 11

First information    Terminal device 12

First information and
second information

Terminal device 12

FIG. 1

Network device

Terminal device

S201. Generate first information

S202. Send the first information

S203. Receive the first information

S204. Determine time of a first reference point based on the first information

FIG. 2

Time unit

Time unit

...

0

t

First reference point

First information

FIG. 3

| First time unit | Second time unit | Third time unit | Fourth Time unit |

0
t

First reference point          First information          First reference point

FIG. 4

FIG. 5

FIG. 6

FIG. 7

Communications apparatus

Processing unit 801

Sending unit 802

**FIG. 8**

901   905

Processor

CPU 0

CPU 1

Processor

CPU 0

CPU 1

902

Bus 904

Memory

903

Communications interface

**FIG. 9**

Communications apparatus

Storage module 1003

Processing module 1001

Communications module 1002

FIG. 10

Communications apparatus

Receiving unit 1101

Processing unit 1102

FIG. 11

Communications apparatus

Storage module 1203

Processing module
1201

Communications
module 1202

FIG. 12

<div align="center">**INTERNATIONAL SEARCH REPORT**</div>

| International application No. |
|---|
| **PCT/CN2019/074924** |

**A. CLASSIFICATION OF SUBJECT MATTER**

H04W 56/00(2009.01)i; H04J 3/06(2006.01)i

According to International Patent Classification (IPC) or to both national classification and IPC

**B. FIELDS SEARCHED**

Minimum documentation searched (classification system followed by classification symbols)

H04W; H04J

Documentation searched other than minimum documentation to the extent that such documents are included in the fields searched

Electronic data base consulted during the international search (name of data base and, where practicable, search terms used)

CNTXT; CNABS; CNKI; VEN; USTXT; EPTXT; WOTXT; 3GPP: 时间, 传输, 同步, 粒度, 毫秒, 微秒, 纳秒, 精度, 误差, 参考点, 时钟, 系统信息, time, delivery, synchronization, granularity, millisecond, microsecond, nanosecond, UTC, reference, precise, accuracy, clock, counter, system information, DCI

**C. DOCUMENTS CONSIDERED TO BE RELEVANT**

| Category* | Citation of document, with indication, where appropriate, of the relevant passages | Relevant to claim No. |
|---|---|---|
| A | CN 106488550 A (HUAWEI TECHNOLOGIES CO., LTD.) 08 March 2017 (2017-03-08) description, paragraphs [0059]-[0088], and figures 2 and 3 | 1-31 |
| A | INTEL CORPORATION. "V2X UE Transmit Timing Requirements and Procedures" *3GPP TSG-RAN WG4 Meeting #80bis R4-167995*, 19 October 2016 (2016-10-19), pp. 1-5 | 1-31 |
| A | ZTE. "Enhancement to the Sidelink Synchronization" *3GPP TSG-RAN WG1 Meeting #85 R1-164969*, 13 May 2016 (2016-05-13), pp. 1-3 | 1-31 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 March 2019** | **09 May 2019** |

| Name and mailing address of the ISA/CN | Authorized officer |
|---|---|
| **National Intellectual Property Administration, PRC (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/074924**

| Patent document cited in search report | | | Publication date (day/month/year) | Patent family member(s) | | | Publication date (day/month/year) |
|---|---|---|---|---|---|---|---|
| CN | 106488550 | A | 08 March 2017 | WO | 2018113397 | A1 | 28 June 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810150956